# FASCICULE DE BREVET EUROPEEN

(11) **EP 4 404 806 B1**
(45) Date de publication et mention de la délivrance du brevet: **22.10.2025**
(21) Numéro de dépôt: 22786367.7
(22) Date de dépôt: 23.09.2022
(51) Int. Cl.: A47J 43/07, A47J 43/10, B01F 27/00

(54) **FOUET POUR APPAREIL DE PREPARATION CULINAIRE**
RÜHRBESEN FÜR EINE LEBENSMITTELZUBEREITUNGSVORRICHTUNG
WHISK FOR A FOOD PREPARATION APPLIANCE

(30) Priorité: 24.09.2021 FR 2110094
(43) Date de publication de la demande: 31.07.2024
(73) Titulaire: SEB S.A., 69130 Ecully (FR)
(72) Inventeur: NESPOUX, Johan, 69134 Ecully Cedex (FR); LEMERCIER, Michel, 69134 Ecully Cedex (FR); FÉRON, Stéphanie, 69134 Ecully Cedex (FR)
(74) Mandataire: SEB Développement
(86) Numéro de dépôt international: PCT/EP2022/076578
(87) Numéro de publication internationale: WO 2023/046922

(56) Documents cités:
- WO-A1-2012/110427
- CA-A1- 2 726 070
- FR-A1- 2 768 607
- US-A- 1 786 603

## Description

### Domaine technique

La présente invention se rapporte au domaine des appareils de préparation culinaire prévus pour mélanger des préparations alimentaires.

La présente invention se rapporte plus particulièrement à un accessoire fouet prévu pour faire foisonner des préparations alimentaires, ainsi qu'à un appareil de préparation culinaire comportant un tel accessoire fouet.

### Etat de la technique

Il est connu du document WO2012/110427 un appareil de préparation culinaire comportant un fouet agencé dans un récipient de travail. Le fouet comporte une tête d'entraînement et des fils en forme de boucle. Les extrémités des fils sont attachées à la tête d'entraînement. Les fils définissent une cage principale qui s'étend à distance de la paroi intérieure du récipient de travail. Le fouet comporte également des brins définissant une cage déformable. Cette cage déformable s'étend autour de la cage principale. Ce fouet est à la fois efficace pour traiter des ingrédients introduits en faible quantité dans le récipient de travail et pour traiter des ingrédients introduits en plus grande quantité, notamment lors de la réalisation de préparations visqueuses. Un inconvénient de cette réalisation réside dans le fait que les brins de la cage déformable peuvent générer beaucoup d'éclaboussures.

### Résumé de l'invention

Un but de la présente invention est de remédier à ces inconvénients en proposant un fouet pour appareil de préparation culinaire, qui permette de minimiser les éclaboussures, tout en présentant une bonne efficacité de foisonnement.

Un autre but de la présente invention est de remédier à ces inconvénients en proposant un appareil de préparation culinaire comportant un fouet qui permette de minimiser les éclaboussures, tout en présentant une bonne efficacité de foisonnement.

A cet effet, l'invention a pour objet un fouet pour appareil de préparation culinaire, ledit fouet comportant une tête d'entraînement, des fils en forme de boucle définissant une cage principale, et des brins en forme de boucle définissant une cage complémentaire déformable présentant une moins grande rigidité que la cage principale, ladite cage complémentaire comportant une partie inférieure souple s'étendant à l'extérieur de la cage principale, du fait que le diamètre maximal de l'enveloppe de la cage complémentaire est inférieur au diamètre maximal de l'enveloppe de la cage principale, de sorte que la partie inférieure souple s'étend seulement en dessous de la cage principale, et non autour du diamètre maximal de l'enveloppe de la cage principale. L'enveloppe de la cage principale ou de la cage complémentaire est définie par la rotation de la cage principale ou de la cage complémentaire autour de l'axe de rotation du fouet, cet axe de rotation correspondant à l'axe de la tête d'entraînement. Ces dispositions permettent de privilégier le contact de la ou des portion(s) inférieure(s) souple(s) avec une portion de fond d'un récipient de travail, ce qui permet de mélanger efficacement la préparation alimentaire et d'amorcer son foisonnement, tout en évitant un contact de la ou des portion(s) inférieure(s) souple(s) avec une paroi latérale dudit récipient de travail, ce qui contribue à minimiser les éclaboussures.

La partie inférieure souple peut s'étendre à distance des fils. Cette disposition permet de favoriser le foisonnement de et de limiter la centrifugation des aliments lors de la phase initiale de préparation.

La cage complémentaire peut s'étendre partiellement à l'intérieur de la cage principale. Cette disposition permet de faciliter la réalisation du fouet.

La cage complémentaire peut présenter une partie intermédiaire s'étendant à l'intérieur de la cage principale entre la tête d'entraînement et la partie inférieure souple. Cette disposition permet de faciliter la réalisation du fouet.

Chaque brin peut présenter deux extrémités de brin attachées à la tête d'entraînement et chaque brin peut comprendre une portion inférieure souple moins rigide que les fils et que les extrémités de brin. Cette disposition permet de faciliter la réalisation du fouet. Cette disposition permet de mieux contrôler la déformation de la partie inférieure souple.

Ladite portion inférieure souple peut être réalisée, au moins partiellement, et de préférence entièrement, dans un matériau plastique, tel qu'un matériau polymère de type polyamide, polypropylène ou un élastomère, notamment en POM. Cette disposition permet d'utiliser une portion inférieure souple présentant une section plus importante que les fils plus rigides de la cage principale, ce qui contribue à améliorer le foisonnement de la préparation alimentaire.

Le ou chaque brin peut comprendre deux portions supérieures rigides présentant chacune une extrémité supérieure formant l'extrémité de brin attachée à la tête d'entraînement et une extrémité inférieure prolongée par ladite portion inférieure souple. Ainsi la partie supérieure dudit brin ou de chacun desdits brins présente une plus grande rigidité que la partie inférieure dudit brin ou de chacun desdits brins.

Les extrémités inférieures des portions supérieures rigides peuvent présenter une orientation convergente. Cette disposition permet d'orienter la partie supérieure de la ou des portion(s) inférieure(s) souple(s) vers l'extrémité inférieure du fouet, ce qui contribue à limiter la déformation de la ou des portion(s) inférieure(s) souple(s), et à minimiser les éclaboussures lors de l'utilisation du fouet.

Les portions inférieures souples peuvent être surmoulées sur les extrémités inférieures des portions supérieures rigides. En alternative, les portions inférieures souples pourraient être montées enfilées sur les extrémités inférieures des portions supérieures rigides.

Les extrémités inférieures des portions supérieures rigides peuvent présenter des conformations, les portions inférieures souples étant surmoulées sur lesdites conformations. Cette disposition permet d'améliorer la tenue des parties surmoulées sur les portions supérieures rigides.

Les portions supérieures rigides peuvent être réalisées en matériau métallique, par exemple en fil d'acier inoxydable.

Les fils de la cage principale peuvent être réalisés en matériau métallique, par exemple en fil d'acier inoxydable.

La ou les longueurs des brins peu(ven)t être supérieure(s) à la ou les longueurs des fils.

Le fouet peut comporter deux brins croisés reliés entre eux par un élément de liaison disposé au croisement des deux brins dans la partie inférieure souple.

Le fouet peut comporter deux brins et deux séries de trois fils, chaque série de trois fils étant intercalée entre les deux brins. Cette disposition contribue à l'obtention d'un bon foisonnement, notamment pour les préparations réalisées en quantité importante.

L'invention a également pour objet un appareil de préparation culinaire, comportant un récipient de travail, un moteur entraînant en rotation un organe de transmission, si désiré avec un mouvement planétaire, et au moins un fouet comportant une tête d'entraînement entrainée par l'organe de transmission, dans lequel ledit au moins un fouet est conforme à l'une au moins des caractéristiques précitées.

La partie inférieure souple peut venir au contact du récipient de travail lors du déplacement du fouet entrainé par l'organe de transmission. Cette disposition permet d'améliorer le foisonnement de la préparation, notamment lorsque de petites quantités d'aliments sont utilisées.

La partie inférieure souple peut venir seulement au contact d'un fond du récipient de travail, sans venir en contact avec une paroi latérale du récipient de travail. Cette disposition permet de limiter les éclaboussures, notamment lorsque des quantités plus importantes d'aliments sont utilisées.

La cage principale peut rester à distance du récipient de travail lors du déplacement du fouet entrainé par l'organe de transmission. Cette disposition permet de minimiser le bruit généré lors de l'utilisation du fouet.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
[Fig.1] La [Fig.1] est une vue partielle en élévation et en coupe d'un exemple de réalisation d'un appareil de préparation culinaire comportant un fouet selon l'invention.
[Fig.2] La [Fig.2] est une vue de côté du fouet illustré sur la [Fig.1],
[Fig.3] La [Fig.3] est une vue en perspective du fouet illustré sur les figures 1 et 2,
[Fig.4] La [Fig.4] est une vue de dessous du fouet illustré sur les figures 1 à 3,
[Fig.5] La [Fig.5] est une vue de dessus du fouet illustré sur les figures 1 à 4,
[Fig.6] La [Fig.6] est une vue de côté du fouet illustré sur les figures 1 à 5, dans laquelle les portions inférieures souples ont été retirées.
[Fig.7] La [Fig.7] est une vue de dessous du fouet illustré sur les figures 1 à 5, dans laquelle les portions inférieures souples ont été retirées.

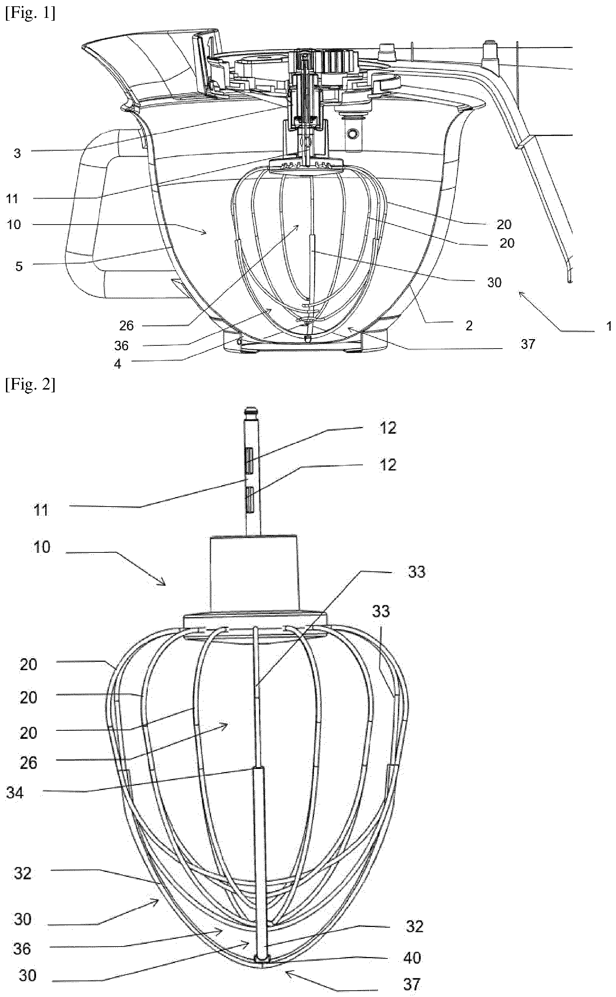

La [Fig.1] illustre de manière partielle un appareil de préparation culinaire 1, du genre robot ménager ou batteur. L'appareil de préparation culinaire 1 comporte un récipient de travail 2 et un moteur (non représenté) entraînant en rotation, par l'intermédiaire d'un organe de transmission 3, au moins un fouet 10. Si désiré l'organe de transmission peut être animé d'un mouvement planétaire.

Le fouet 10 illustré sur les figures 1 à 5 comporte une tête d'entraînement 11 configurée pour être entraînée par l'organe de transmission 3. La tête d'entraînement 11 présente des conformations 12 en forme de méplat prévues pour être insérées dans l'organe de transmission 3 pour transmettre un mouvement de rotation au fouet 10.

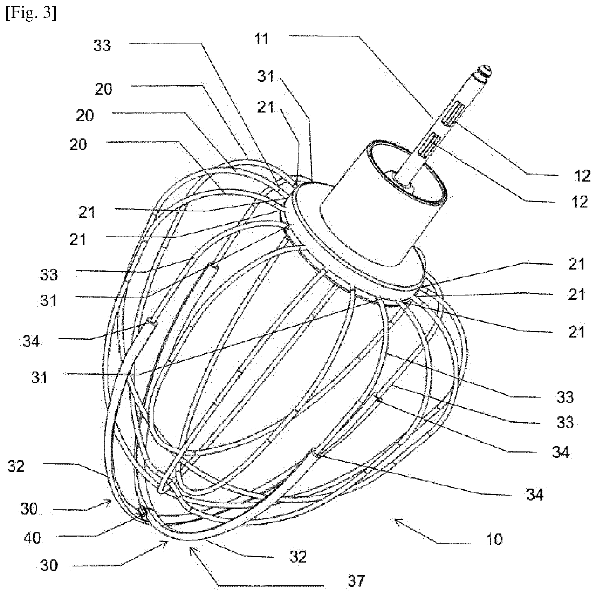

Tel que mieux visible sur les figures 2 à 5, le fouet 10 comporte des fils 20 en forme de boucle. Tel que bien visible sur les figures 2 et 3, les fils 20 définissent une cage principale 26. Tel que mieux visible sur la [Fig.3], les fils 20 présentent deux extrémités de fil 21 attachées à la tête d'entraînement 11. De préférence les extrémités de fils 21 sont attachées à la tête d'entraînement 11 de manière opposée. Les fils 20 sont de préférence rigides. Les fils 20 peuvent notamment être réalisés en matériau métallique, de préférence en fil d'acier inoxydable. Les fils 20 peuvent être de même longueur, ou de longueur différente.

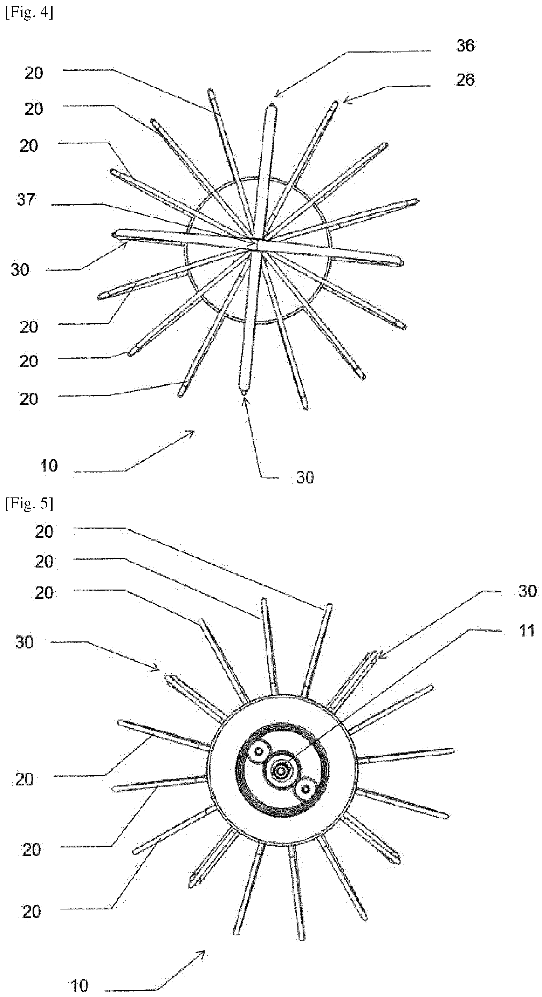

Tel que mieux visible sur les figures 4 et 5, le fouet 10 comporte six fils formant six boucles principales. Le diamètre des fils est par exemple compris entre 1,5 mm et 2 mm.

Tel que mieux visible sur les figures 2 à 5, le fouet 10 comporte aussi des brins 30 en forme de boucle. Les brins 30 définissent une cage complémentaire 36. Les brins 30 présentent deux extrémités de brin 31 attachées à la tête d'entraînement 11. De préférence les extrémités de brin 31 sont attachées à la tête d'entraînement 11 de manière opposée. Les brins 30 de la cage complémentaire 36 présentent une plus grande longueur que les fils 20 de la cage principale 26. Les brins 30 peuvent être de même longueur, ou de longueur différente.

La cage complémentaire 36 s'étend en partie hors de la cage principale 26. Plus particulièrement, la cage complémentaire 36 comporte une partie inférieure souple 37 s'étendant à l'extérieur de la cage principale 26. La partie inférieure souple 37 est agencée à l'opposé de la tête d'entraînement 11. Tel que visible sur les figures 1 et 2, la cage complémentaire 36 s'étend partiellement à l'intérieur de la cage principale 26. La partie inférieure souple 37 s'étend à distance des fils 20.

Tel que visible notamment sur les figures 2 et 4, le diamètre maximal de l'enveloppe de la cage complémentaire 36 est inférieur au diamètre maximal de l'enveloppe de la cage principale 26. Ainsi la partie inférieure souple 37 s'étend seulement en dessous de la cage principale 26, et non autour du diamètre maximal de l'enveloppe de la cage principale 26.

Chaque brin 30 comprend une portion inférieure souple 32 moins rigide que les fils 20 et que les extrémités de brin 31. Les portions inférieures souples 32 sont réalisées, au moins partiellement, et de préférence entièrement, dans un matériau plastique, tel qu'un matériau polymère de type polyamide, polypropylène ou un élastomère, notamment en POM.

Dans l'exemple de réalisation préféré illustré sur les figures, chaque brin 30 comprend deux portions supérieures rigides 33 présentant chacune une extrémité supérieure formant l'extrémité de brin 31 attachée à la tête d'entraînement 11 et une extrémité inférieure 34 prolongée par la portion inférieure souple 32. En d'autres termes, la portion inférieure souple 32 de chaque brin 30 relie les deux extrémités inférieures 34 des deux portions supérieures rigides 33 de chaque brin 30. De préférence, les portions supérieures rigides 33 sont réalisées en matériau métallique, par exemple en fil d'acier inoxydable. Si désiré, les portions supérieures rigides 33 peuvent être réalisées dans la même matière que les fils 20.

Tel que bien visible sur les figures 2 et 3, les portions inférieures souples 32 s'étendent à l'extérieur d'une partie inférieure de la cage principale 26 opposée à la tête d'entraînement 11. Tel que mieux visible sur la [Fig.2], la cage complémentaire 36 présente une partie intermédiaire s'étendant à l'intérieur de la cage principale 26 entre la tête d'entraînement 11 et la partie inférieure souple 37. En d'autres termes, les brins 30 présentent une portion centrale s'étendant à l'extérieur de la cage principale 26, mais entre la tête d'entraînement 11 et ladite partie centrale les brins 30 s'étendent au moins partiellement à l'intérieur de la cage principale 26.

Tel que mieux visible sur les figures 4 et 5, le fouet 10 comporte deux brins 30 formant deux boucles complémentaires. Plus particulièrement, les boucles complémentaires sont agencées de manière perpendiculaire. Trois fils 20 sont intercalés entre deux brins 30. De préférence, les fils 20 et les brins 30 sont répartis de manière régulière autour de la tête d'entraînement 11.

Les deux brins 30 sont croisés et sont reliés entre eux par un élément de liaison 40 disposé au croisement des deux brins 30 dans la partie inférieure souple 37.

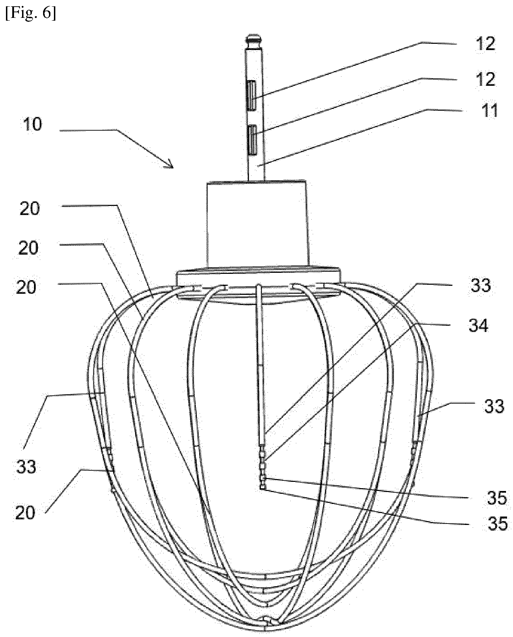

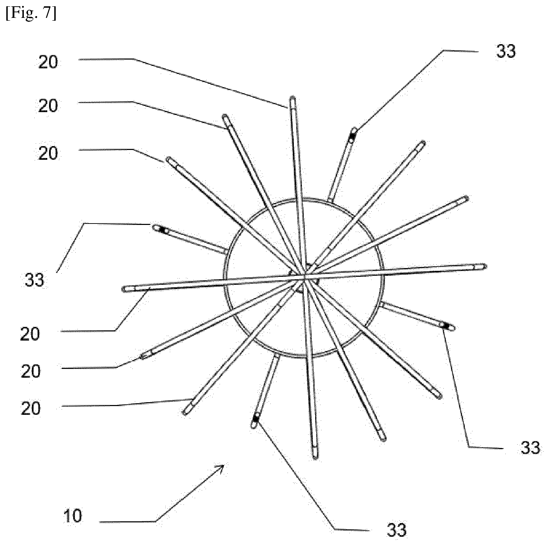

Les figures 6 et 7 représentent le fouet 10 dans lequel les portions inférieures souples 32 des brins 30 ont été retirées. Tel que bien visible sur la [Fig.6], les extrémités inférieures 34 des portions supérieures rigides 33 présentent une orientation convergente. Les portions inférieures souples 32 peuvent notamment être surmoulées sur les extrémités inférieures 34 des portions supérieures rigides 33. A cet effet les extrémités inférieures 34 des portions supérieures rigides 33 présentent des conformations 35 sur lesquelles sont surmoulées les portions inférieures souples 32. A titre de variante, les portions inférieures souples 32 pourraient notamment être enfilées sur les extrémités inférieures 34 des portions supérieures rigides 33.

L'appareil de préparation culinaire 1 et le fouet 10 s'utilisent de la manière suivante.

L'appareil de préparation culinaire 1 présente une configuration de travail, représentée sur la [Fig.1], dans laquelle la cage principale 26 et la cage complémentaire 36 du fouet 10 sont plongées dans le récipient de travail 2.

Dans la configuration de travail de l'appareil de préparation culinaire 1, au moins une des portions inférieures souples 32, et de préférence chacune des portions inférieures souples 32, peut venir au contact d'une portion de fond du récipient de travail 2. Ainsi, lors du déplacement du fouet 10 entrainé par l'organe de transmission 3, la partie inférieure souple 37 vient au contact du récipient de travail 2. De préférence, seules les portions inférieures souples 32 des brins 30 viennent au contact du récipient de travail 2. En d'autres termes, la partie inférieure souple 37 vient au contact seulement d'un fond 4 du récipient de travail 2 sans venir en contact avec une paroi latérale 5 du récipient de travail 2. Le fond 4 présente une inclinaison inférieure à 45° par rapport à la perpendiculaire à l'axe de rotation de l'organe de transmission entraînant la tête d'entraînement 11. La paroi latérale 5 présente une inclinaison supérieure à 45° par rapport à la perpendiculaire à l'axe de rotation de l'organe de transmission entraînant la tête d'entraînement 11. La paroi latérale 5 peut prolonger le fond 4 sans rupture de pente.

Toutefois, dans cette configuration de travail, la cage principale 26 ne vient pas au contact du récipient de travail 2. Ainsi, lors du déplacement du fouet 10 entrainé par l'organe de transmission 3, les fils 20 ne viennent pas au contact du récipient de travail 2. En d'autres termes, la cage principale 26 reste à distance du récipient de travail 2 lors du déplacement du fouet 10 entrainé par l'organe de transmission 3.

L'utilisateur place dans le récipient de travail 2 les aliments à transformer, par exemple des blancs d'œuf à monter en neige, monte le fouet 10 sur l'organe de transmission, et met en marche l'appareil de préparation culinaire 1 présentant la configuration de travail. Lorsque la quantité de blancs d'œufs utilisée est peu importante, seules les portions inférieures souples 32 sont en contact avec les blancs d'œufs lorsque les blancs d'œufs sont encore liquides. Lorsque la quantité de blancs d'œufs est plus importante, au moins l'un des fils 20 peut également être en contact avec les blancs d'œufs lorsque les blancs d'œufs sont encore liquides. L'agitation du fouet 10 dans le récipient de travail 2 contribue à incorporer de l'air dans les blancs d'œufs, ce qui provoque leur foisonnement et donc une augmentation du volume de la préparation présente dans le récipient de travail 2. Le fait que la partie inférieure souple 37 s'étend seulement en dessous de la cage principale 26, et non autour du diamètre maximal de l'enveloppe de la cage principale 26, contribue à limiter les éclaboussures lors de la réalisation de la préparation lorsque des quantités de blanc d'œuf plus importantes sont utilisées. Le fouet 10 est ainsi efficace et agréable à utiliser.

A titre de variante, le fouet 10 n'est pas nécessairement utilisé avec un appareil de préparation culinaire 1 comportant un boitier portant un récipient de travail 2 et comportant un organe de transmission 3 agencé au-dessus du récipient de travail 2 et prévu pour le montage de la tête d'entraînement 11 afin d'entraîner le fouet 10. Le fouet 10 pourrait notamment être utilisé avec un appareil de préparation culinaire 1 de type batteur comportant un boitier portatif comportant un organe de transmission 3 prévu pour le montage de la tête d'entraînement 11 afin d'entraîner le fouet 10, dans lequel le fouet 10 est déplacé manuellement par l'utilisateur dans un récipient de travail.

A titre de variante, au moins l'un des brins 30 peut présenter une partie supérieure s'étendant partiellement ou entièrement à l'extérieur de la cage principale 26. Les extrémités de brin 31 peuvent appartenir à ladite partie supérieure.

Diverses modifications et/ou améliorations évidentes pour l'homme du métier peuvent être apportées aux modes de réalisation de l'invention décrits dans la présente description sans sortir du cadre de l'invention défini par les revendications.

## Revendications

1. Fouet (10) pour appareil de préparation culinaire, ledit fouet (10) comportant une tête d'entraînement (11), des fils (20) en forme de boucle définissant une cage principale (26), et des brins (30) en forme de boucle définissant une cage complémentaire (36) déformable présentant une moins grande rigidité que la cage principale (26), ladite cage complémentaire (36) comportant une partie inférieure souple (37) s'étendant à l'extérieur de la cage principale (26), **caractérisé en ce que** le diamètre maximal de l'enveloppe de la cage complémentaire (36) est inférieur au diamètre maximal de l'enveloppe de la cage principale (26), de sorte que la partie inférieure souple (37) s'étend seulement en dessous de la cage principale (26), et non autour du diamètre maximal de l'enveloppe de la cage principale (26).

2. Fouet (10) selon la revendication 1, **caractérisé en ce que** la partie inférieure souple (37) s'étend à distance des fils (20).

3. Fouet (10) selon l'une des revendications 1 ou 2, **caractérisé en ce que** la cage complémentaire (36) s'étend partiellement à l'intérieur de la cage principale (26).

4. Fouet (10) selon l'une des revendications 1 à 3, **caractérisé en ce que** la cage complémentaire (36) présente une partie intermédiaire s'étendant à l'intérieur de la cage principale (26) entre la tête d'entraînement (11) et la partie inférieure souple (37).

5. Fouet (10) selon l'une des revendications 1 à 4, **caractérisé en ce que** chaque brin (30) présente deux extrémités de brin (31) attachées à la tête d'entraînement (11) et **en ce que** chaque brin (30) comprend une portion inférieure souple (32) moins rigide que les fils (20) et que les extrémités de brin (31).

6. Fouet (10) selon la revendication 5, **caractérisé en ce que** ladite portion inférieure souple (32) est réalisée, au moins partiellement, et de préférence entièrement, dans un matériau plastique, tel qu'un matériau polymère de type polyamide, polypropylène ou un élastomère, notamment en POM.

7. Fouet (10) selon l'une des revendications 5 ou 6, **caractérisé en ce que** chaque brin (30) comprend deux portions supérieures rigides (33) présentant chacune une extrémité supérieure formant l'extrémité de brin (31) attachée à la tête d'entraînement (11) et une extrémité inférieure (34) prolongée par ladite portion inférieure souple (32).

8. Fouet (10) selon la revendication 7, **caractérisé en ce que** les extrémités inférieures (34) des portions supérieures rigides (33) présentent une orientation convergente.

9. Fouet (10) selon l'une des revendications 7 ou 8, **caractérisé en ce que** les portions inférieures souples (32) sont surmoulées sur les extrémités inférieures (34) des portions supérieures rigides (33).

10. Fouet (10) selon la revendication 9, **caractérisé en ce que** les extrémités inférieures (34) des portions supérieures rigides (33) présentent des conformations (35) et **en ce que** les portions inférieures souples (32) sont surmoulées sur les conformations (35).

11. Fouet (10) selon l'une des revendication 7 à 10, **caractérisé en ce que** les portions supérieures rigides (33) sont réalisées en matériau métallique, par exemple en fil d'acier inoxydable.

12. Fouet (10) selon l'une des revendications 1 à 11, **caractérisé en ce que** la ou les longueurs des brins (30) est/sont supérieure(s) à la ou les longueurs des fils (20).

13. Fouet (10) selon l'une des revendications 1 à 12, **caractérisé en ce que** le fouet (10) comporte deux brins (30) croisés reliés entre eux par un élément de liaison (40) disposé au croisement des deux brins (30) dans la partie inférieure souple (37).

14. Fouet (10) selon l'une des revendications 1 à 13, **caractérisé en ce que** le fouet (10) comporte deux brins (30) et deux séries de trois fils (20), et **en ce que** chaque série de trois fils (20) est intercalée entre les deux brins (30).

15. Appareil de préparation culinaire (1), comportant un récipient de travail (2), un moteur entraînant en rotation un organe de transmission (3), si désiré avec un mouvement planétaire, et au moins un fouet (10) comportant une tête d'entraînement (11) entrainée par l'organe de transmission (3), **caractérisé en ce que** ledit au moins un fouet (10) est conforme à l'une des revendications 1 à 14.

16. Appareil de préparation culinaire (1) selon la revendication 15, **caractérisé en ce que** la partie inférieure souple (37) vient au contact du récipient de travail (2) lors du déplacement du fouet (10) entrainé par l'organe de transmission (3).

17. Appareil de préparation culinaire (1) selon l'une des revendications 15 ou 16, **caractérisé en ce que** la partie inférieure souple (37) vient seulement au contact d'un fond (4) du récipient de travail (2), sans venir en contact avec une paroi latérale (5) du récipient de travail (2).

18. Appareil de préparation culinaire (1) selon l'une des revendications 15 à 17, **caractérisé en ce que** la cage principale (26) reste à distance du récipient de travail (2) lors du déplacement du fouet (10) entrainé par l'organe de transmission (3).

## Patentansprüche

1. Rührbesen (10) für eine Lebensmittelzubereitungseinrichtung, wobei der Rührbesen (10) einen Antriebskopf (11), Drähte (20) in Schlaufenform, die einen Hauptkäfig (26) definieren, und Stränge (30) in Schlaufenform umfasst, die einen verformbaren komplementären Käfig (36) definieren, der mindestens eine größere Steifigkeit aufweist als der Hauptkäfig (26), wobei der komplementäre Käfig (36) einen flexiblen unteren Teil (37) umfasst, der sich außerhalb des Hauptkäfigs (26) erstreckt, **dadurch gekennzeichnet, dass** der maximale Durchmesser der Hülle des komplementären Käfigs (36) derart kleiner ist als der maximale Durchmesser der Hülle des Hauptkäfigs (26), dass der flexible untere Teil (37) sich nur unterhalb des Hauptkäfigs (26) und nicht um den maximalen Durchmesser der Hülle des Hauptkäfigs (26) herum erstreckt.

2. Rührbesen (10) nach Anspruch 1, **dadurch gekennzeichnet, dass** der flexible untere Teil (37) sich in einem Abstand zu den Drähten (20) erstreckt.

3. Rührbesen (10) nach einem der Ansprüche 1 oder 2, **dadurch gekennzeichnet, dass** sich der komplementäre Käfig (36) teilweise im Inneren des Hauptkäfigs (26) erstreckt.

4. Rührbesen (10) nach einem der Ansprüche 1 bis 3, **dadurch gekennzeichnet, dass** der komplementäre Käfig (36) einen Zwischenteil aufweist, das sich im Inneren des Hauptkäfigs (26) zwischen dem Antriebskopf (11) und dem flexiblen unteren Teil (37) erstreckt.

5. Rührbesen (10) nach einem der Ansprüche 1 bis 4, **dadurch gekennzeichnet, dass** jeder Strang (30) zwei Strangenden (31) aufweist, die an dem Antriebskopf (11) angebracht sind und dadurch, dass jeder Strang (30) einen flexiblen unteren Teil (32) umfasst, der weniger steif ist als die Drähte (20) und die Strangenden (31).

6. Rührbesen (10) nach Anspruch 5, **dadurch gekennzeichnet, dass** der flexible untere Teil (32) mindestens teilweise und vorzugsweise vollständig aus einem Kunststoffmaterial, wie einem Polymermaterial vom Polyamid-, Polypropylentyp oder einem Elastomertyp, insbesondere aus POM hergestellt ist.

7. Rührbesen (10) nach einem der Ansprüche 5 oder 6, **dadurch gekennzeichnet, dass** jeder Strang (30) zwei steife obere Abschnitte (33) umfasst, die jeweils ein oberes Ende, das das Ende des Strangs (31) bildet, das an dem Antriebskopf (11) angebracht ist, und ein durch den flexiblen unteren Abschnitt (32) verlängertes unteres Ende (34) aufweist.

8. Rührbesen (10) nach Anspruch 7, **dadurch gekennzeichnet, dass** die unteren Enden (34) der steifen oberen Abschnitte (33) eine konvergierende Orientierung aufweisen.

9. Rührbesen (10) nach einem der Ansprüche 7 oder 8, **dadurch gekennzeichnet, dass** die flexiblen unteren Abschnitte (32) an den unteren Enden (34) der steifen oberen Abschnitte (33) überformt sind.

10. Rührbesen (10) nach Anspruch 9, **dadurch gekennzeichnet, dass** die unteren Enden (34) der steifen oberen Abschnitte (33) Gestaltungen (35) aufweisen, und dadurch, dass die flexiblen unteren Abschnitte (32) an den Gestaltungen (35) überformt sind.

11. Rührbesen (10) nach einem der Ansprüche 7 bis 10, **dadurch gekennzeichnet, dass** die steifen oberen Abschnitte (33) aus Metallmaterial hergestellt sind, zum Beispiel aus Edelstahldraht.

12. Rührbesen (10) nach einem der Ansprüche 1 bis 11, **dadurch gekennzeichnet, dass** die Länge(n) der Stränge (30) größer ist/sind als die Länge(n) der Drähte (20).

13. Rührbesen (10) nach einem der Ansprüche 1 bis 12, **dadurch gekennzeichnet, dass** der Rührbesen (10) zwei überkreuzte, untereinander durch ein Verbindungselement (40) verbundene Stränge (30) umfasst, das an der Kreuzungsstelle der zwei Stränge (30) in dem flexiblen unteren Teil (37) angeordnet ist.

14. Rührbesen (10) nach einem der Ansprüche 1 bis 13, **dadurch gekennzeichnet, dass** der Rührbesen (10) zwei Stränge (30) und zwei Reihen von drei Drähten (20) umfasst, und dadurch, dass jede Reihe von drei Drähten (20) zwischen den zwei Strängen (30) eingefügt ist.

15. Lebensmittelzubereitungseinrichtung (1), umfassend einen Arbeitsbehälter (2), einen Motor, der ein Übertragungsbauteil (3) in Rotation versetzt, falls gewünscht mit einer planetarischen Bewegung, und mindestens einen Rührbesen (10) der einen Antriebskopf (11) umfasst, der durch das Übertagungsbauteil (3) angetrieben wird, **dadurch gekennzeichnet, dass** der mindestens eine Rührbesen (10) einem der Ansprüche 1 bis 14 entspricht.

16. Lebensmittelzubereitungseinrichtung (1) nach Anspruch 15, **dadurch gekennzeichnet, dass** der flexible untere Teil (37) bei der Verschiebung des Rührbesens (10), der durch das Übertragungsbauteil (3) angetrieben wird, mit dem Arbeitsbehälter (2) in Kontakt kommt.

17. Lebensmittelzubereitungseinrichtung (1) nach einem der Ansprüche 15 oder 16, **dadurch gekennzeichnet, dass** der flexible untere Teil (37) nur mit einem Boden (4) des Arbeitsbehälters (2) in Kontakt kommt, ohne mit einer Seitenwand (5) des Arbeitsbehälters (2) in Kontakt zu kommen.

18. Lebensmittelzubereitungseinrichtung (1) nach einem der Ansprüche 15 bis 17, **dadurch gekennzeichnet, dass** der Hauptkäfig (26) bei der Verschiebung des Rührbesens (10), der durch das Übertragungsbauteil (3) angetrieben wird, in einem Abstand von dem Arbeitsbehälter (2) bleibt.

## Claims

1. Whisk (10) for a food preparation appliance, said whisk (10) comprising a drive head (11), wires (20) in the form of a loop defining a main cage (26), and strands (30) formed into a loop defining a deformable additional cage (36) of lower rigidity than the main cage (26), said additional cage (36) comprising a flexible lower part (37) extending outside of the main cage (26), **characterized in that** the maximum diameter of the envelope of the additional cage (36) is less than the maximum diameter of the envelope of the main cage (26), so that the flexible lower part (37) extends only below the main cage (26) and not around the maximum diameter of the envelope of the main cage (26).

2. Whisk (10) according to claim 1, **characterized in that** the flexible lower part (37) extends at a distance from the wires (20).

3. Whisk (10) according to any one of claims 1 or 2, **characterized in that** the additional cage (36) extends partially inside the main cage (26).

4. Whisk (10) according to any one of claims 1 to 3, **characterized in that** the additional cage (36) has an intermediate part extending inside the main cage (26) between the drive head (11) and the flexible lower part (37).

5. Whisk (10) according to any one of claims 1 to 4, **characterized in that** each strand (30) has two strand ends (31) attached to the drive head (11) and **in that** each strand (30) comprises a flexible lower portion (32) of lower rigidity than the wires (20) and than the strand ends (31).

6. Whisk (10) according to claim 5, **characterized in that** said flexible lower portion (32) is made, at least partially, and preferably entirely, of a plastics material, such as a polymer material of the polyamide or polypropylene type, or an elastomer, in particular POM.

7. Whisk (10) according to any one of claims 5 or 6, **characterized in that** each strand (30) comprises two rigid upper portions (33) each having an upper end forming the strand end (31) attached to the drive head (11) and a lower end (34) extended by said flexible lower portion (32).

8. Whisk (10) according to claim 7, **characterized in that** the lower ends (34) of the rigid upper portions (33) have a converging orientation.

9. Whisk (10) according to any one of claims 7 or 8, **characterized in that** the flexible lower portions (32) are overmoulded onto the lower ends (34) of the rigid upper portions (33).

10. Whisk (10) according to claim 9, **characterized in that** the lower ends (34) of the rigid upper portions (33) have shaped sections (35) and **in that** the flexible lower portions (32) are overmoulded onto the shaped sections (35).

11. Whisk (10) according to any one of claims 7 to 10, **characterized in that** the rigid upper portions (33) are made of a metallic material, for example stainless steel wire.

12. Whisk (10) according to any one of claims 1 to 11, **characterized in that** the length(s) of the strands (30) is/are greater than the length(s) of the wires (20).

13. Whisk (10) according to any one of claims 1 to 12, **characterized in that** the whisk (10) comprises two crossed strands (30) connected to each other by a connecting element (40) arranged at the crossing of the two strands (30) in the flexible lower part (37).

14. Whisk (10) according to any one of claims 1 to 13, **characterized in that** the whisk (10) comprises two strands (30) and two sets of three wires (20), and **in that** each set of three wires (20) is interposed between the two strands (30).

15. Food preparation appliance (1), comprising a working container (2), a motor turning a transmission member (3), with a planetary movement if so desired, and at least one whisk (10) comprising a drive head (11) driven by the transmission member (3), **characterized in that** said at least one whisk (10) is in accordance with any one of claims 1 to 14.

16. Food preparation appliance (1) according to claim 15, **characterized in that** the flexible lower part (37) comes into contact with the working container (2) during movement of the whisk (10) driven by the transmission member (3).

17. Food preparation appliance (1) according to any one of claims 15 or 16, **characterized in that** the flexible lower part (37) comes only into contact with a bottom (4) of the working container (2), without coming into contact with a side wall (5) of the working container (2).

18. Food preparation appliance (1) according to any one of claims 15 to 17, **characterized in that** the main cage (26) remains at a distance from the working container (2) during movement of the whisk (10) driven by the transmission member (3).
